# EUROPEAN PATENT SPECIFICATION

(11) **EP 1 561 169 B1**
(45) Date of publication and mention of the grant of the patent: **15.05.2019**
(21) Application number: 02797354.4
(22) Date of filing: 16.12.2002
(51) Int. Cl.: G06F 9/00, G06F 3/00, H04L 12/24

(54) **DATA STORAGE DEVICES HAVING IP CAPABLE PARTITIONS**
DATENSPEICHEREINRICHTUNGEN MIT IP-FÄHIGEN PARTITIONEN
DISPOSITIFS DE STOCKAGE DE DONNEES COMPRENANT DES PARTITIONS COMPATIBLES IP

(30) Priority: 12.11.2002 US 425867 P
(43) Date of publication of application: 10.08.2005
(73) Proprietor: Rateze Remote Mgmt. L.L.C., Wilmington, DE 19808 (US)
(72) Inventor: FRANK, Charles, Zetera Corporation, San Clemente, CA 92673 (US); LUDWIG, Thomas, Zetera Corporation, San Clemente, CA 92673 (US); HANAN, Thomas, Zetera Corporation, Mission Viejo, CA 92691 (US); BABBITT, William, Zetera Corporation, Perris, CA 92570 (US)
(74) Representative: Small, Gary James
(86) International application number: PCT/US2002/040199
(87) International publication number: WO 2004/044753

(56) References cited:
- WO-A1-01/90902
- US-A- 5 634 111
- US-A- 5 634 111
- VMWARE INC.: "Vmware workstation user manual" VMWARE, 5 September 2002 (2002-09-05), pages 1-420, XP002443319 www.vmware.com/pdf/ms32_manual.pdf

## Description

### Field of The Invention

The field of the invention is data storage devices.

### Background of The Invention

There is a trend within the field of electronics to physically (i.e. geographically) disaggregate functionality, and to rely instead on networked resources. Of special interest are resources available over a packet communications network such as the Internet. In addition to the data being transferred, packets include header information such as type of data contained in the packet, i.e. HTML, voice, ASCII, etc., and origination and destination node information. The header information permits error checking, and routing across packet switched networks such as the Internet between devices that may be widely spaced apart. The header information also allows extremely disparate devices to communicate with each other - such as a clock radio to communicate with a computer. Recently published US patent application no. 20020031086, (Welin, March 14, 2002) refers to linking "computers, IP phones, talking toys and home appliances such as refrigerators, microwave ovens, bread machines, blenders, coffee makers, laundry machines, dryers, sweepers, thermostat assemblies, light switches, lamps, fans, drape and window shade motor controls, surveillance equipment, traffic monitoring, clocks, radios, network cameras, televisions, digital telephone answering devices, air conditioners, furnaces and central air conditioning apparatus."

Communications with storage devices has not kept pace with the trend to disaggregate resources. Disk access has always been under the control of a disk operating system such as DOS, or Microsoft® Windows®. Unfortunately, putting the operating system at the conceptual center of all computing devices has resulted in a dependence on such operating systems, and has tended to produce ever larger and more complicated operating systems. Now that many electronic devices, from personal digital assistants to telephones, digital cameras, and game consoles, are becoming smaller and ever more portable, the dependence on large operating systems has become a liability. One solution is to provide a stripped-down operating system that requires much less overhead. Microsoft® CE® is an example. That solution, however, sacrifices considerable functionality present in the larger systems.

VM ware™ workstation software allows a host machine to run multiple operating systems in secure, transportable, high-performance virtual computers.

US5, 634, 111 discloses a host computer connected with a magnetic disk storage device by an SCSI bus. In the magnetic disk storage device, a plurality of partitions are set in a disk drive unit and have device identifiers (IDs) respectively allocated thereto.

What is needed is a storage device that can be directly accessed by multiple other devices, without the need to go through an operating system.

### Summary of the Invention

In accordance with an aspect of the system, there is provided a storage system according to claim 1.

In the present invention a storage device has partitions that are separately addressed by distinct IP addresses. This allows direct access of the partitions, on a peer-to-peer basis, by any other device that can communicate using IP. Many limitations on access to the storage device can thereby be eliminated, including geographical limitations, and the need for a given storage partition to be under the central control of a single operating system.

Preferred storage devices support spanning between or among partitions of the same device, as well as between or among different storage devices. Both multicast and proxy spanning are contemplated.

Combinations of the inventive storage devices with each other, and with prior art storage devices are contemplated, in all manner of mirroring and other arrangements.

In still other aspects of the invention, a given storage device can comprise one or more types of media, including any combination of rotating and non-rotating media, magnetic and optical, and so forth.

Various objects, features, aspects and advantages of the inventive subject matter will become more apparent from the following detailed description of preferred embodiments, along with the accompanying drawing figures.

### Brief Description of The Drawing

Fig. 1 is a schematic of a prior art disk drive split into multiple partitions, but where the entire memory is accessed using a single IP address.
Fig. 2 is a schematic of a prior art storage system in which three disk drives are addressed in their entireties using three different IP addresses.
Fig. 3 is a schematic of a storage device having multiple partitions that are separately addressed by different IP addresses.
Fig. 4 is a schematic of a storage device having multiple partitions that are separately addressed by different IP addresses, and some of the partitions are addressed using multiple IP addresses.
Fig. 5 is a schematic of a storage device having multiple partitions comprising different storage media.
Fig. 6 is a schematic of a storage device having multiple partitions, two of which are spanned using multicast spanning.
Fig. 7 is a schematic of a storage device having multiple partitions, two of which are spanned using proxy spanning.
Fig. 8 is a schematic of a storage system in which three storage devices are logically coupled using multicast spanning.
Fig. 9 is a schematic of a storage system in which three storage devices are logically coupled using proxy spanning.
Fig. 10 is a schematic of a storage system in which partitions of a first storage device are mirrored on partitions of one or more additional storage device using multicast mirroring.

### Detailed Description

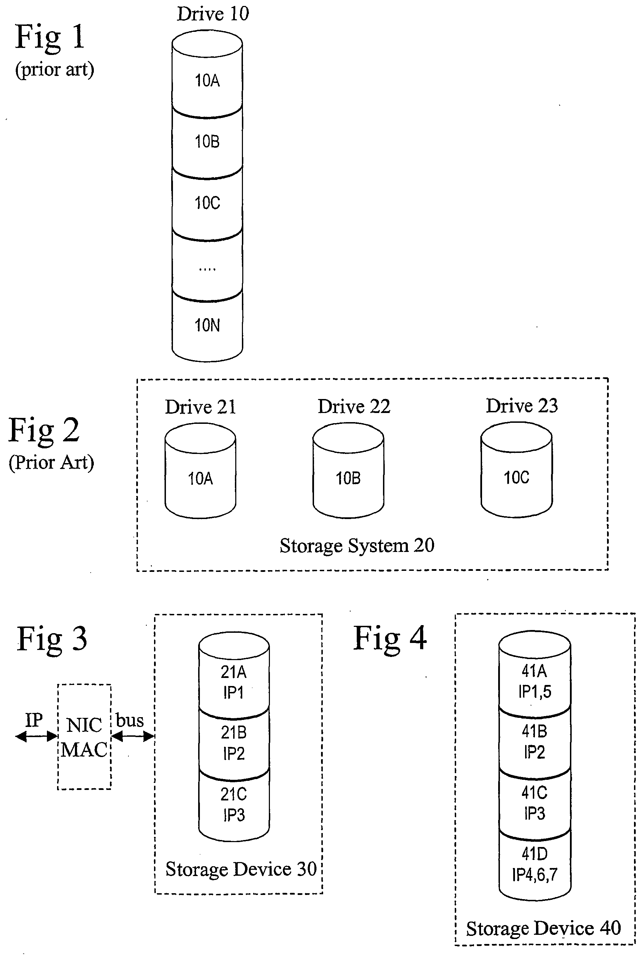

Prior art **Figure 1** generally depicts a disk drive 10 that is split into multiple partitions 10_{A}, 10_{B}, 10_{C}... 10_{N}. The entire storage area is addressed using a single address IP₁, with individual blocks of data being addressed by a combination of IP₁ and some other information such as partition and offset, or Logical Block Address (LBA). The data is thus always accessed under the control of a disk operating system that provides the additional information. For that reason drive 10 is usually located very close to the processor that runs the operating system, and is usually connected to a hard bus of a computer, RAID or other system.

It is known to format the various partitions 10A ... 10N differently from one another, under control of different operating systems. However, the entire memory space comprises a single media type, namely rotating magnetic memory, even though there may be some sort of RAM buffer (not shown).

It should be appreciated that the term "IP" is used herein in a broad sense, to include any networking protocol. Thus, an IP address is used as a euphemism for a network address.

Prior art **Figure** 2 generally depicts a storage system 20 in which three disk drives 21, 22, 23 are addressed using three different IP addresses, IP1, IP2, and IP3. The drives can have multiple partitions (drive 21 has three partitions 21_{A}, 21_{B}, 21_{C} (not shown), and drive 23 has two partitions 23_{A} and 23_{B} (not shown)), but here again individual blocks of data are addressed using a combination of the IP address, some other information such as partition and offset, or LBA. Drives 21, 22, 23 can be spanned and/or mirrored, but the data on each drive is always accessed using that drive's particular IP address.

In **Figure** 3 is a storage device 30 according to the present invention has three partitions 21_{A}, 21_{B}, 21_{C}, which are separately addressed by different IP addresses IP₁, IP₂, IP₃, respectively. Those skilled in the art will appreciate that showing a small plurality of partitions is merely a matter of convenience, in this and other figures, and that storage device 30 could have any practical number of partitions. Similarly, it should be appreciated that depicting storage devices without partitions indicates that such devices have no partitions.

Utilizing IP addresses to route packets directly to and from partitions facilitates the use of very light communication protocols. In particular, the partitions may be directly addressed at the IP level of TCP/IP or UDP/IP stack. It should be appreciated, however, that in order make use of the IP addresses, the storage device 30 (and indeed the various partitions) would need to have sufficient functionality to communicate using IP. That functionality could be designed into the devices (or partitions), or it could be added onto storage devices using an IP adapter 32 (not shown). Indeed, the adapter in such circumstances would essentially be a simple block-to-packet and packet-to-block translator.

Storage device 30 can be connected to any suitable bus by any suitable means. Thus, the operative principles herein can operate across a wide variety of physical buses and protocols, including ATA, ATAPI, SCSI, Fiber CH, PCMCIA, CardBus, and USB. Storage device 30 can also alternatively or additionally operate across a network acting as a virtual IP bus, with the term "IP" being used herein generically with reference to any internetworking protocol that handles packets. It is contemplated, for example, that a user may have a stand-alone storage device that communicates wirelessly with a Local Area Network (LAN), which in turn may be connected to a WAN or to the Internet. Other devices that are also connected to the network (whether in the home, office, or elsewhere) could directly access one or more partitions of the storage device. For example, an IP capable television (not shown) could display images or movies stored on one partition, while a digital camera (not shown) could store/retrieve images on another partition. Still another partition might hold an operating system and office software for use with a laptop, or even an IP capable display and IP capable keyboard and mouse. Printing from any of the partitions might occur on an IP capable printer that is also connected wirelessly, or by hardwire, to the network.

An interesting corollary is that the partitions or other elements can all communicate as peers on a peer-to-peer network. As used herein, the term "element" refers to a hardware unit that is a functional portion of a device, and traditionally communicates with other units of the same device across a bus, without having its own IP address. This can completely eliminate dependence on any particular operating system, and can eliminate operating systems altogether. In addition, many of the elements attached to the network will be dependent on other elements attached to the network to perform tasks that are not within their individual capacities, and will be able to discover, reserve, and release the resources of other peers needed to perform such tasks. Peers will preferably be able to discover the other elements attached to the network, the characteristics of the other elements attached to the network, and possibly the contents of at least some of the elements attached to the network. Such discovery is accomplished without the assistance of a master device, and will preferably involve direct communication between the peer elements.

Preferred networks will be masterless in that all elements have equal access to the network and the other elements attached to the network. The peer elements of the network will preferably communicate with each other utilizing low-level protocols such as those that would equate to those of the transport and lower layers of the OSI model. Preferred embodiments will utilize TCP and UDP IP protocols for communication between elements.

Storage device 30 is preferably able to dynamically create partitions upon receipt of requests from network elements. For example, when a network element requests use of device 30, the network element may provide a unique identifier, possibly a name, to storage device 30, which in turn associates the identifier with any newly created partition. In some instances the network element may also request a particular storage size to be allocated, including all of the remaining storage available on the storage device 30.

In preferred embodiments, the IP addresses for such partitions are obtained from an address server such as a DHCP server upon request from the storage device 30. It is important to note, however, that address allocation devices such as DHCP servers are not masters, since they don't control the network, elements coupled to the network, or the sharing of resources between elements. Assignment of IP addresses to partitions may additionally or alternatively occur during initialization of the device, such as when it is first turned on.

Since storage device 30 may be associated with only a single network interface card (NIC), it is preferred that storage elements be able to obtain multiple IP addresses despite having a single NIC and a single media access control (MAC) address. This can be accomplished by providing a unique partition identifier to an address server when trying to obtain a IP address from the address server. It is contemplated that associating a name provided by an element with any partition created for that element makes it possible to identify each of the partitions of a storage element, despite the fact that IP address associated with each partition may have changed since the partition was created.

Additional details can be found in concurrently filed PCT application no. __________, entitled "Communication Protocols, Systems and Methods" and PCT application no. __________, entitled "Electrical Devices With Improved Communication", the disclosures of which are incorporated herein by reference.

In **Figure 4****,** storage device 40 is similar to storage device 30 in that it has multiple partitions 41_{A}, 41_{B}, 41_{C}, 41_{D} that are separately addressed by different IP addresses IP₁, IP₂, IP₃, IP₄, respectively. But here some of the partitions are addressed using multiple IP addresses. In particular, partition 41_{A} is addressed with IP₁ and IP₅. Partition 41_{D} is addressed with IP₄, IP₆ and IP₇.

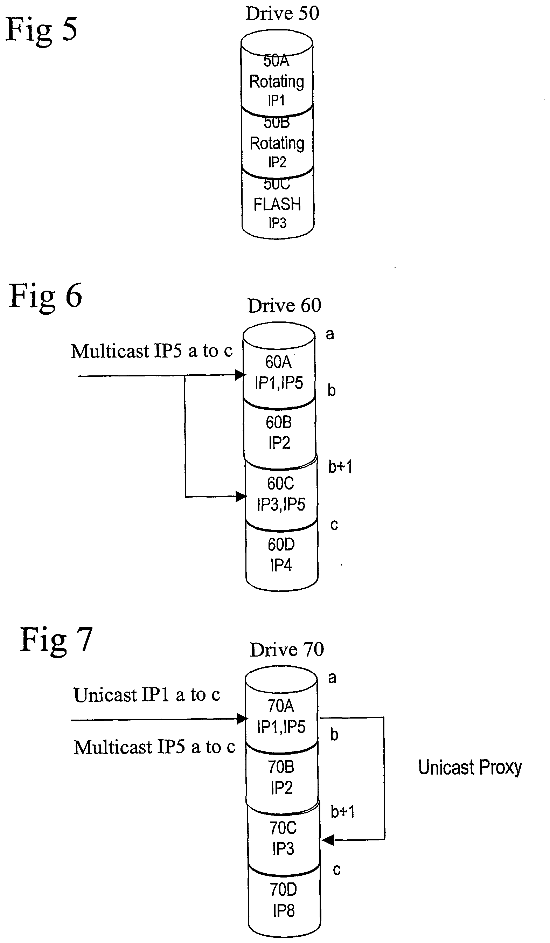

In **Figure** 5 a storage device 50 has multiple partitions comprising different storage media. In this particular example there are 2 partitions of rotating media 50_{A}, 50_{B}, one partition of flash memory 50_{C}. All other practical combinations of these and other media are also contemplated. As in Figure 3, the various partitions are separately addressed by different IP addresses IP₁, IP₂, IP₃, respectively.

In **Figure** 6 a storage device 60 has multiple partitions 60_{A}, 60_{B}, 60_{C}, 60_{D}, addressed by IP addresses IP₁, IP₂, IP₃, IP₄, and IP₅ (multicast) respectively. Two of these partitions, 60_{A} and 60_{C}, are spanned in that partition 60_{A} extends from logical address a to logical address b, while partition 60_{C} continues from logical address b+1 to logical address c. The spanned set is thus logical address a to logical address c. The spanning here is multicast spanning, because the partitions share multicast IP5 which is used to address both partitions 60_{A} and 60_{C}.

In **Figure** 7 a storage device 70 has multiple partitions 70_{A}, 70_{B}, 70_{C}, 70_{D}, addressed by IP addresses IP₁, IP₂, IP₃, IP₈, respectively. (The use of IP₈ here rather than IP₄ is intended to illustrate that the IP addresses need not be consecutive in any manner.) Here again two of the partitions are spanned, 70_{A} and 70_{C}, in that partition 70_{A} extends from logical address a to logical address b, while partition 70_{C} continues from logical address b+1 to logical address c. The spanned set is thus once again logical address a to logical address c. Here, however, we are dealing with proxy spanning as opposed to multicast spanning. IP₁ is used to address partition 70_{A}, while the second part of the spanned data, in partition 70_{C}, is addressed by the IP1 proxy using IP₃. Of course, it is possible to combine multicast spanning and proxy spanning within the same storage device.

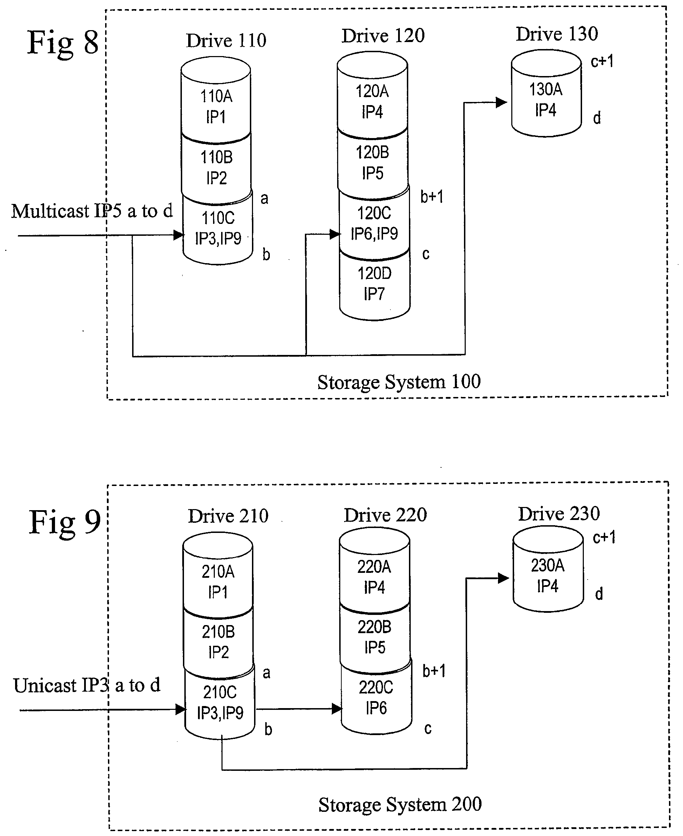

**In** **Figure** 8 a storage system 100 has three storage devices 110, 120, and 130 coupled to depict multicast spanning. Device 110 has three partitions 110_{A}, 110_{B} and 110_{C}, which are separately addressed using IP addresses IP₁, IP₂, and IP₃, respectively. Device 120 has four partitions 120_{A}, 120_{B}, 120_{C}, and 120_{D}, which are separately addressed using IP addresses IP₄, IP₅, IP₆, and IP₇, respectively. Device 130 is not partitioned, which for our purposes is the same as saying that it only has one partition. The entirely of the storage area of device 130 is addressed using IP address IP₈. The spanning in this case is among all three drives. Partition 110C extends from logical address a to logical address b; partition 120D continues from logical address b+1 to logical address c, and the data space of device 130 extends from logical address c+1 to logical address d. The data set extends from logical address a to logical address d.

**Figure** 9 is similar to Figure 8, in that spanning occurs across three drives, and the data set extends from logical address a to logical address d. The main conceptual difference is that the storage devices are logically coupled using proxy spanning rather than multicast spanning. Here, device 210 has three partitions 210_{A}, 210_{B} and 210_{C}, which are separately addressed using IP addresses IP₁, IP₂, and IP₃, respectively. Device 230 is not partitioned. The entirely of the storage area of device 230 is addressed using IP address IP₄. Device 220 has three partitions, 220_{A}, 220_{B} and 220_{C}, which are separately addressed using IP addresses IP₄, IP₅, and IP₆, respectively. Partition 210_{C} extends from logical address a to logical address b; the data space of partition 220_{C} continues from logical address b+1 to logical address c, and partition 230 extends from logical address c+1 to logical address d.

As elsewhere in this specification, the specific embodiments shown with respect to Figure 9 are merely examples of possible configurations. A greater or lesser number of storage devices could be utilized, and indeed spanning may be protean, in that devices and/or partitions may be added to or dropped from the spanning over time. There can also be any combination of multicast and proxy spanning across and/or within storage devices, which may have the same or different media. Moreover, the use of IP addresses facilitates physically locating the various storage devices virtually anywhere an IP network can reach, regardless of the relative physical locations among the devices.

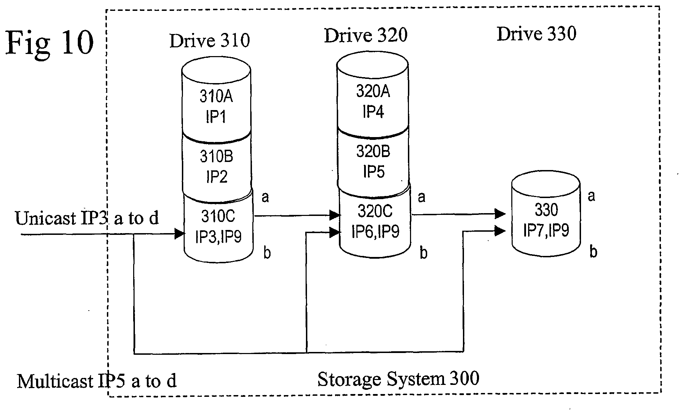

In **Figure 10** a storage system 300 provides mirroring of partitions between three different physical storage devices 310, 320 and 330. This could be done by proxy, in a manner analogous to that described above for proxy spanning, or in higher performance systems using multicasting. Thus, partitions in multiple storage devices are addressed using the same IP address. In this particular embodiment, storage device 310 has partitions 310_{A}, 310_{B}, and 310_{c}, addressed using IP addresses IP₁, IP₂, IP₃ and IP9. Storage device 320 has partitions 320_{A}, 320_{B}, and 320_{C}, addressed using IP addresses IP₄, IP₅, IP6 and IP₉. Write requests to IP₃ or IP₉ will result in partition 310_{C} 320c and 330_{C} storing the same data. Read requests to IP₁ address will result in 310_{C}, 320_{C} and 330_{C} responding with the same information, with presumably the requester using whichever data arrives first. In the Multicast form it may be preferred that device 310,320 and 330 listen for the first data returned by any member of the mirrored set, and then remove that request from their request que if another device completes the request before they complete the request.

### Communications

In preferred embodiments, communications between a storage element and a non-storage element, will utilize a datagram protocol in which data blocks are atomically mapped to a target device. A datagram sent between elements will preferably comprise command (CMD), logical block address (LBA), data, and token fields, and no more than X additional bytes where X is one of 1, 2, 7, 10, 17, and 30. The data field of such a datagram is preferably sized to be the same as the block size (if applicable) of the element to which the datagram is addressed. As such, an element sending a quantity of data to a storage element where the quantity of data is larger than the block size of the storage element will typically divide the quantity of data into blocks having the same size as the blocks of the storage element, assign LBAs to the blocks, and send each block and LBA pair to the storage element in a datagram.

It is preferred that the datagrams be communicated between elements encapsulating them within addressed packets such as IP packets, and the IP address of the encapsulating packet be used to identify both the element a packet is intended to be sent to, and the partition within the element that the datagram pertains to.

It is preferred that datagram recipients handle datagrams on a first come, first served basis, without reordering packets, and without assembling the contents of the data fields of datagrams into a larger unit of data prior to executing a command identified in the CMD field. As an example, an storage element may receive a datagram containing a block of data, an LBA, and a write command. The storage element, without having to wait for any additional packets, utilizes the IP address of the packet enclosing the datagram to identify the partition to be used, and utilizes the LBA to identify the location within the partition at which the data in the data field is to be written.

Handling the data in individual datagrams as they arrive rather than reassembling the data permits the use of an implied ACK for each command. Using an implied rather than an explicit ACK results in a substantial increase in performance.

### Marketing of Storage Devices and Adapters

It is contemplated that once persons in the industry recognize the benefits of having storage devices having partitions that are accessed using their own IP addresses, companies will start producing and/or marketing such devices It is also contemplated that companies will start producing and/or marketing adapters that includes a functionality (hardware or software, or come combination of the two) to permit traditional disk drives, flash memories, and other storage devices to operate in that manner.

Thus, methods falling within the inventive subject matter include manufacturing or selling a disk drive or other storage device in which the partitions can utilize their own IP addresses to execute packet communication with other network elements. Other inventive methods include manufacturing or selling adapters that enable prior art type storage devices to do the same. Indeed it is contemplated that companies will recognize that such adapters are available, and will continue to manufacture or sell prior art type storage devices, knowing (or even advertising) that users can employ such adapters to enable the prior art type storage devices to use in an infringing manner.

Thus, specific embodiments and applications of the inventive storage devices have been disclosed. It should be apparent, however, to those skilled in the art that many more modifications besides those already described are possible without departing from the inventive concepts herein. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A storage system (300) comprising:
a network interface and a storage device (310) having a first storage partition (310A) and a second storage partition (310B), wherein the storage device is adapted to receive and process datagrams and is **characterized in that** the storage device is further adapted to:
obtain a first IP address and a second IP address at least in part by providing a first name associated with the first storage partition and a second name associated with the second storage partition to an address server via the network interface, the first IP address (IP1) and the second IP address (IP2) to provide sufficient information for a client to communicate over a network to directly access the first and second storage partitions (310A, 310B), respectively, at an IP level;
receive a packet, via the network interface, including the first IP address and a datagram that includes a command and a block address; and
access a block within the first storage partition based at least in part on the command, the block address, and the first IP address.

2. The storage system of claim 1 wherein the storage device is adapted to communicate with the client using a datagram protocol in which data blocks are atomically mapped to at least one of the first and second storage partitions.

3. The storage system of claim 2 wherein the datagram further includes a token within a data portion of the datagram.

4. The storage system of claim 1 wherein the datagram includes a data block field equal to a set block size associated with the storage device.

5. The storage system of any of the preceding claims, wherein the first and second names are not IP addresses.

6. The storage system of any of the preceding claims, further comprising a multicast spanned storage area formed from the first storage partition and the second storage partition and accessible by the client via a single multicast address associated with the first and second storage partitions.

7. The storage system of any of the preceding claims, further comprising a multicast mirrored storage area that includes the first storage partition and the second storage partition and is accessible by the client via a single multicast address associated with the first and second storage partitions.

8. The storage system of any of the preceding claims, further comprising a set of spanned and/or mirrored partitions wherein the first and the second storage partitions are separated by a proxy server.

9. The storage system of any of the preceding claims, wherein the storage device comprises a first type of media and the storage system further comprises a second storage device distinct from the storage device and having a second type of media logically partitioned into a third storage partition wherein the third storage partition has a third IP address distinct from the first and the second IP addresses.

10. The storage system of claim 9 further comprising a multicast spanned storage area that includes the first storage partition and the third storage partition and is accessible by the client via a single multicast address associated with the first and the third storage partitions.

11. The storage system of claim 9 further comprising a multicast mirrored storage area that includes the first storage partition and the third storage partition and is accessible by the client via a single multicast address associated with the first and the third storage partitions.

12. The storage system of claim 9 wherein the second type of media is different than the first type of media.

13. The storage system of any of the preceding claims, wherein the first storage partition is formatted differently than the second storage partition.

14. The storage system of any of the preceding claims, wherein the network comprises a wireless network.

15. The storage system of any of the preceding claims, wherein the storage device comprises a non-rotating media.

16. The storage system of any of the preceding claims, wherein the first and second storage partitions are discoverable by the client.

17. The storage system of any of the preceding claims, wherein the first IP address and the second IP address provide sufficient information for the client to communicate over the network to directly access the first and second storage partitions, respectively, without requiring a master device to control the access to the first and second storage partitions.

## Patentansprüche

1. Speichersystem (300), umfassend:
eine Netzwerkschnittstelle und eine Speichervorrichtung (310) mit einer ersten Speicherpartition (310A) und einer zweiten Speicherpartition (310B), wobei die Speichervorrichtung zum Empfangen und Verarbeiten von Datagrammen ausgelegt und **dadurch gekennzeichnet ist, dass** die Speichervorrichtung ferner ausgelegt ist zum:
Einholen einer ersten IP-Adresse und einer zweiten IP-Adresse wenigstens zum Teil durch Bereitstellen eines ersten Namens, der mit der ersten Speicherpartition assoziiert ist, und eines zweiten Namens, der mit der zweiten Speicherpartition assoziiert ist, für einen Adressserver über die Netzwerkschnittstelle, wobei die erste IP-Adresse (IP1) und die zweite IP-Adresse (IP2) zum Bereitstellen ausreichender Informationen für einen Client zum Kommunizieren über ein Netzwerk sind, um auf einer IP-Ebene direkt auf die erste bzw. die zweite Speicherpartition (310A, 310B) zuzugreifen;
Empfangen eines Pakets über die Netzwerkschnittstelle, das die erste IP-Adresse und ein Datagramm umfasst, das einen Befehl und eine Blockadresse umfasst; und
Zugreifen auf einen Block innerhalb der ersten Speicherpartition wenigstens zum Teil basierend auf dem Befehl, der Blockadresse und der ersten IP-Adresse.

2. Speichersystem nach Anspruch 1, wobei die Speichervorrichtung so ausgelegt ist, dass sie mit dem Client unter Verwendung eines Datagrammprotokolls kommuniziert, in welchem Datenblöcke atomar auf mindestens eine der ersten und der zweiten Speicherpartition abgebildet sind.

3. Speichersystem nach Anspruch 2, wobei das Datagramm ferner einen Token innerhalb eines Datenabschnitts des Datagramms umfasst.

4. Speichersystem nach Anspruch 1, wobei das Datagramm ein Datenblockfeld gleich einer festgelegten Blockgröße umfasst, die mit der Speichervorrichtung assoziiert ist.

5. Speichersystem nach einem der vorhergehenden Ansprüche, wobei der erste und der zweite Name keine IP-Adressen sind.

6. Speichersystem nach einem der vorhergehenden Ansprüche, ferner umfassend einen übergreifenden Multicast-Speicherbereich, der aus der ersten Speicherpartition und der zweiten Speicherpartition gebildet ist und auf den durch den Client über eine einzige Multicast-Adresse, die mit der ersten und der zweiten Speicherpartition assoziiert ist, zugegriffen werden kann.

7. Speichersystem nach einem der vorhergehenden Ansprüche, ferner umfassend einen gespiegelten Multicast-Speicherbereich, der die erste Speicherpartition und die zweite Speicherpartition umfasst und auf den durch den Client über eine einzige Multicast-Adresse, die mit der ersten und der zweiten Speicherpartition assoziiert ist, zugegriffen werden kann.

8. Speichersystem nach einem der vorhergehenden Ansprüche, ferner umfassend einen Satz von übergreifenden und/oder gespiegelten Partitionen, wobei die erste und die zweite Speicherpartition durch einen Proxy-Server getrennt sind.

9. Speichersystem nach einem der vorhergehenden Ansprüche, wobei die Speichervorrichtung einen ersten Typ von Medien umfasst, und das Speichersystem ferner eine zweite Speichervorrichtung umfasst, die von der Speichervorrichtung verschieden ist, einen zweiten Typ von Medien aufweist und logisch in eine dritte Speicherpartition partitioniert ist, wobei die dritte Speicherpartition eine dritte IP-Adresse aufweist, die von der ersten und der zweiten IP-Adresse verschieden ist.

10. Speichersystem nach Anspruch 9, ferner umfassend einen übergreifenden Multicast-Speicherbereich, der die erste Speicherpartition und die dritte Speicherpartition umfasst und auf den durch den Client über eine einzige Multicast-Adresse, die mit der ersten und der der dritten Speicherpartition assoziiert ist, zugegriffen werden kann.

11. Speichersystem nach Anspruch 9, ferner umfassend einen gespiegelten Multicast-Speicherbereich, der die erste Speicherpartition und die dritte Speicherpartition umfasst und auf den durch den Client über eine einzige Multicast-Adresse, die mit der ersten und der der dritten Speicherpartition assoziiert ist, zugegriffen werden kann.

12. Speichersystem nach Anspruch 9, wobei der zweite Typ von Medien vom ersten Typ von Medien verschieden ist.

13. Speichersystem nach einem der vorhergehenden Ansprüche, wobei die erste Speicherpartition anders als die zweite Speicherpartition formatiert ist.

14. Speichersystem nach einem der vorhergehenden Ansprüche, wobei das Netzwerk ein drahtloses Netzwerk umfasst.

15. Speichersystem nach einem der vorhergehenden Ansprüche, wobei die Speichervorrichtung nichtrotierende Medien umfasst.

16. Speichersystem nach einem der vorhergehenden Ansprüche, wobei die erste und die zweite Speicherpartition vom Client erkannt werden können.

17. Speichersystem nach einem der vorhergehenden Ansprüche, wobei die erste IP-Adresse und die zweite IP-Adresse ausreichende Informationen für den Client zum Kommunizieren über das Netzwerk bereitstellen, um ohne Erfordernis eines Steuerns des Zugriffs auf die erste und die zweite Speicherpartition durch eine Mastervorrichtung direkt auf die erste bzw. die zweite Speicherpartition zuzugreifen.

## Revendications

1. Système de stockage (300) comprenant :
une interface réseau et un dispositif de stockage (310) ayant une première partition de stockage (310A) et une seconde partition de stockage (310B), dans lequel le dispositif de stockage est conçu pour recevoir et traiter des datagrammes et est **caractérisé en ce que** le dispositif de stockage est en outre conçu pour :
obtenir au moins en partie une première adresse IP et une seconde adresse IP en fournissant un premier nom associé à la première partition de stockage et un second nom associé à la seconde partition de stockage à un serveur d'adresses par l'intermédiaire de l'interface réseau, où la première adresse IP (IP1) et la seconde adresse IP (IP2) fournissent des informations suffisantes pour qu'un client puisse communiquer sur un réseau afin d'accéder directement respectivement à la première et à la seconde partitions de stockage (310A, 310B), à un niveau IP ;
recevoir un paquet, par l'intermédiaire de l'interface réseau, comprenant la première adresse IP et un datagramme comprenant une commande et une adresse de bloc ; et
accéder à un bloc dans la première partition de stockage au moins en partie en fonction de la commande, de l'adresse de bloc et de la première adresse IP.

2. Système de stockage selon la revendication 1, dans lequel le dispositif de stockage est conçu pour communiquer avec le client en utilisant un protocole de datagrammes dans lequel des blocs de données sont mis en correspondance de manière atomique avec au moins l'une parmi la première et la seconde partitions de stockage.

3. Système de stockage selon la revendication 2, dans lequel le datagramme comprend en outre une marque dans une partie de données du datagramme.

4. Système de stockage selon la revendication 1, dans lequel le datagramme comprend un champ de bloc de données égal à une taille de bloc définie et associée au dispositif de stockage.

5. Système de stockage selon l'une quelconque des revendications précédentes, dans lequel les premier et second noms ne sont pas des adresses IP.

6. Système de stockage selon l'une quelconque des revendications précédentes, comprenant en outre une zone de stockage étendue à diffusion multiple formée à partir de la première partition de stockage et de la seconde partition de stockage et accessible par le client par l'intermédiaire d'une adresse de diffusion multiple unique associée à la première et à la seconde partitions de stockage.

7. Système de stockage selon l'une quelconque des revendications précédentes, comprenant en outre une zone de stockage à diffusion multiple et structurée en miroir, qui comprend la première partition de stockage et la seconde partition de stockage et est accessible par le client par l'intermédiaire d'une adresse de diffusion multiple unique associée à la première et à la seconde partitions de stockage.

8. Système de stockage selon l'une quelconque des revendications précédentes, comprenant en outre un ensemble de partitions étendues et/ou structurées en miroir, les première et seconde partitions de stockage étant séparées par un serveur proxy.

9. Système de stockage selon l'une quelconque des revendications précédentes, dans lequel le dispositif de stockage comprend un premier type de support et le système de stockage comprend en outre un second dispositif de stockage distinct du dispositif de stockage et a un second type de support partitionné logiquement dans une troisième partition de stockage, dans lequel la troisième partition de stockage a une troisième adresse IP distincte de la première et de la seconde adresses IP.

10. Système de stockage selon la revendication 9, comprenant en outre une zone de stockage étendue à diffusion multiple, qui comprend la première partition de stockage et la troisième partition de stockage et est accessible par le client par l'intermédiaire d'une adresse de diffusion multiple unique associée à la première et à la troisième partitions de stockage.

11. Système de stockage selon la revendication 9, comprenant en outre une zone de stockage à diffusion multiple et structurée en miroir, qui comprend la première partition de stockage et la troisième partition de stockage et est accessible par le client par l'intermédiaire d'une adresse de diffusion multiple unique associée à la première et à la troisième partitions de stockage.

12. Système de stockage selon la revendication 9, dans lequel le second type de support est différent du premier type de support.

13. Système de stockage selon l'une quelconque des revendications précédentes, dans lequel la première partition de stockage est formatée différemment de la seconde partition de stockage.

14. Système de stockage selon l'une quelconque des revendications précédentes, dans lequel le réseau comprend un réseau sans fil.

15. Système de stockage selon l'une quelconque des revendications précédentes, dans lequel le dispositif de stockage comprend un support non rotatif.

16. Système de stockage selon l'une quelconque des revendications précédentes, dans lequel la première et la seconde partitions de stockage peuvent être découvertes par le client.

17. Système de stockage selon l'une quelconque des revendications précédentes, dans lequel la première adresse IP et la seconde adresse IP fournissent au client des informations suffisantes pour communiquer sur le réseau afin d'accéder directement à la première et à la seconde partitions de stockage, respectivement, sans nécessiter de dispositif maître pour contrôler l'accès à la première et à la seconde partitions de stockage.
